# EUROPEAN PATENT APPLICATION

(11) **EP 2 723 041 A1**
(43) Date of publication of application: **23.04.2014**
(21) Application number: 12382404.7
(22) Date of filing: 19.10.2012
(51) Int. Cl.: H04L 29/08

(54) **A multi device synchronization method and system**

(71) Applicant: Telefonica S.A., 28013 Madrid (ES); JaJah Ltd, Ra'Anana (IL)
(72) Inventor: Garcia Bernardo, Gustavo, 28013 Madrid (ES); Neysadt, John, Ra' Anana (IL); Hoffman, Doron, Ra'Anana (IL)
(74) Representative: Gonzalez-Alberto Rodriguez, Natalia

(57) **Abstract**

The method comprising establishing a connection between a mobile device with one or more remote devices through a remote server to share data; receiving presence information about any of said mobile device or remote devices; synchronizing said data to be shared, between said mobile device and said one or more remote devices, based upon said presence information received, wherein said synchronizing is performed by triggering said remote server a set of notification events according to said presence information. By means of an event filter engine and in order to allow said data sharing, said set of notification events are filtered to select any of said mobile device or remote devices that will receive a filtered notification event.

The system of the invention is adapted to implement the method of the invention.

## Description

### Field of the art

The present invention generally relates to IP communications for providing telephony services, and more particularly to a multi device synchronization method and system.

### Prior State of the Art

The increasing usage of consumer electronic devices and the rise in interchanging data information between them has increased the need of mobile operators and carriers to extend their range of services offerings in an increasingly dynamic and competitive market and also to improve the synchronization methods between said electronic devices in order to reduce the number of events that occurs.

An existing method for synchronizing data across multiple applications devices is for instance the push notifications such as ones provided by Google® or Apple®.

A common synchronization markup language is SyncML which offers an open standard as a replacement for existing data synchronization solutions, which have mostly been somewhat vendor-, application- or operating system specific.

Another possible technique for synchronizing is polling a server in order to identify changes. This technique is a best practice in many communication protocols.

Finally, another possible way can be done by a server sending events over active TCP/IP connections, such as in IMAP4 or SIP.

Some prior patent applications related to the present invention are for instance the US 2012/0151354 *Synchronization based on device presence,* which proposes to use the presence of other devices only to trigger the notification. Another related patent is US 200782 *Communication with a mobile device,* which doesn't performs a filtering, as the present invention does, it only describes network based synchronization by queuing events for device and sends them to it, when device comes online.

### Summary of the Invention

The object of the present invention is to provide a new mechanism that takes into account online/offline status and the capabilities of each of the subscribed electronic devices to reduce number of events that need to be processed by the system.

To that end, the present invention in a first aspect provides a multi device synchronization data method, comprising as commonly in the art:
establishing a connection between a mobile device with one or more remote devices through a remote server to share data;
receiving presence information about any of said mobile device or remote devices;
synchronizing said data to be shared, between said mobile device and said one or more remote devices, based upon said presence information received, wherein said synchronizing is performed by triggering said remote server a set of notification events according to said presence information.

The method in a characteristic manner comprises filtering by means of an event filter engine said set of notification events to select any of said mobile device or remote devices that will receive a filtered notification event, allowing sharing said data.

The step of establishing a connection between a mobile device with one or more remote devices could be done for example via a SIP REGISTER command, as a media tag parameter.

The presence information received is generated as a result of modifying the data that is going to share on any of said mobile device or remote devices.

In an embodiment, the mobile device or remote devices must authorize the reception of said at least one filtered notification event and define which data of said modified data, by using a data domain label, will be synchronized with other devices.

The registration of each of said mobile device or remote devices is done through a registration server of said remote server by using an access layer via an Internet protocol. The Internet protocol can be for instance a Session Initiation Protocol (SIP), a Hypertext Transfer Protocol (HTTP) and/or and IMAP, among any other protocol.

Another embodiment comprises automatically stopping said registering upon request of any of said mobile device or remote devices.

In yet another embodiment, said modified data is stored in a database before sending said at least one filtered notification.

The modified data sending includes in an embodiment an indication of said data domain label and/or an identity of which of said devices has triggered the filtered notification event.

The sending of the filtered notification event includes in another embodiment the content of said modified data, a timestamp of said filtered notification event and a plurality of additional parameters sent via said access layer. This can be performed by sending via a SIP NOTIFY and/or a SIP INFO command for SIP protocol and/or via the transport protocol used by said devices wishing to receive said at least one filtered notification event trough the access layer.

When any of said mobile device or remote devices is offline the sending of said at least one filtered notification event is performed by an application service engine. This application service engine comprises a push notification, an email and/or a short message service (sms).

A second aspect of the present invention provides a multi device synchronization data system, comprising:
means for establishing a connection between a mobile device with one or more remote devices through a remote server;
means for receiving presence information about any of said mobile device or remote devices;
means for synchronizing a data sharing between said mobile device and said one or more remote devices based upon said presence information received, and
said remote server adapted to trigger a set of notification events according to said presence information to perform said synchronization.

The system of the second aspect of the present invention, in a characteristic manner comprises an event filter engine comprising means for filtering said set of notification events to select any of said mobile device or remote devices that will receive a filtered notification event, and thus allowing sharing said data.

The system of the second aspect of the present invention is adapted to implement the method of the first aspect.

### Brief Description of the Drawings

The previous and other advantages and features will be more fully understood from the following detailed description of embodiments, with reference to the attached, which must be considered in an illustrative and non-limiting manner, in which:

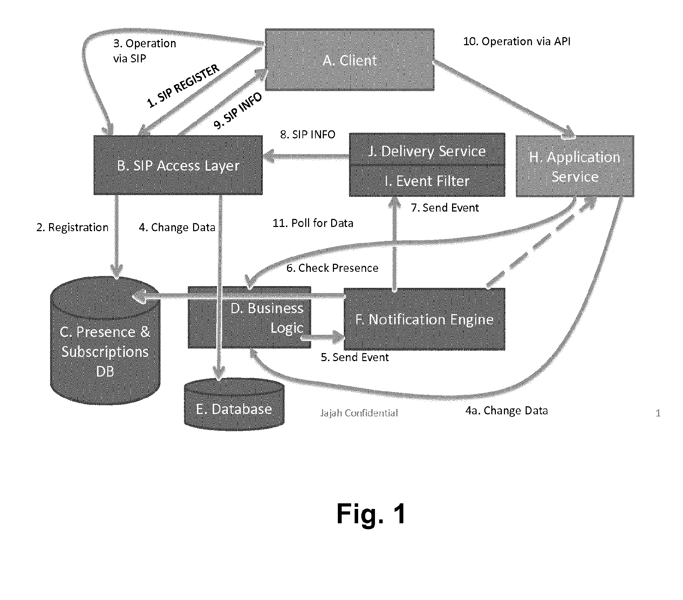

Figure 1 is a graph diagram showing an illustration of the multi device synchronization mechanism proposed in the present invention.

### Detailed Description of Several Embodiments

Embodiments of the proposed mechanism are showed in Fig. 1. Two alternatives of the synchronization method can be used in the present invention:
Alternative 1: Data is stored in the central database, and events indicating that it has changed are sent to the clients, which then retrieve the actual changes from the database
Alternative 2: Data is not stored in central database, and the events with the actual change are propagated to the clients

In the proposed mechanism, each client (A) that wishes to receive synchronization events, must declare that he supports receiving the events, and specify one or more data domain labels (e.g. Communications-History, Address-Book, or any other data that is needed to be synchronized across multiple devices). It can do this when client is available, by registering with Registration (C) for particular identity (user/device, etc.). Registration can be done through an optional access layer (B), using one of existing protocols, such as SIP (using SIP REGISTER command), HTTP, IMAP or some other protocol. Registration could be a presence server, an HLR/VLR, ENUM over DNS or other type of registrar service. Termination of registration can be done explicitly, if client sends an explicit command, by client requesting to terminate the connection with Access layer, by client failing to send a heartbeat for configurable interval of time or by some other mean, depending on protocol between client and registrar server.

When the data is modified (3, 4), via request from one of the clients (A) or triggered by external source (4a), business logic module (D), optionally stores (Alternative1) the data in the Database (E) and sends (5) an event to Notification Engine (F), which includes indication of data domain, identity that triggered the event and optionally the device-id that triggered it.

Notification Engine performs the following logic:
1. Retrieve a list of configured Delivery Services (e.g. J, H) for the data domain to which event belongs.
2. Optionally, filter out the events according to configurable condition on data that has changed, e.g. send notifications for operation=create|update && data.comm-type == voicemail.
   Notification Engine Event Filter (I) can include per-device filtering to decide to which clients devices to send the event to. Event Filter can be done according the following logic flow:
3. Retrieve a list of device for given identity is present from registrar server (C)
4. Optionally remove from the list devices that are not interested in the given data domain (e.g. devices that are not capable of processing events for communication history changes)
5. Optionally, if device id was included in the event, remove device with same id from the list, to save sending events to device that triggered it.

Delivery Service (J) can implement the following logic:
6. Optionally puts the event into a queue for each device or that multiple rapid notifications can be coalesced together and send as one. Once a configurable interval (e.g. 1/2 second), it de-queues all the events for a given device and coalesce multiple events for the same data-domain together and proceed to sending.
7. Send the event (8) according to Alternative 1 or Alternative 2 to the client, including contents of the data, timestamp of the event and additional parameters via an Access Layer. This can be done with SIP NOTIFY, or SIP INFO commands for SIP protocol, or with via other protocol, depending transport the client uses.
8. Access Layer (B) sends then the event to the client.
9. If Alternative 2 is used, the client (A) then processes the event according to it logic.
10. If Alternative 1 is used, the client (A), requests (10) to retrieve the data via some communication method via Application Server (H) or Access Layer (B), which routes the request (11) to Business Logic (D), which can retrieve it from a Database (E).

Alternatively, Notification Delivery service (H) can implement other delivery and filtering methods for events, including sending events to offline clients, such as push notifications, email, sms, etc.

A person skilled in the art could introduce changes and modifications in the embodiments described without departing from the scope of the invention as it is defined in the attached claims.

## Claims

1. A multi device synchronization data method, comprising:
establishing a connection between a mobile device with one or more remote devices through a remote server to share data;
receiving presence information about any of said mobile device or remote devices;
synchronizing said data to be shared, between said mobile device and said one or more remote devices, based upon said presence information received,
wherein said synchronizing is performed by triggering said remote server a set of notification events according to said presence information, **characterized in that** the method comprises filtering by means of an event filter engine said set of notification events to select any of said mobile device or remote devices that will receive a filtered notification event, allowing sharing said data.

2. A multi device synchronization data method according to claim 1, wherein said receiving presence information is generated as a result of a modification of said data to be shared on any of said mobile device or remote devices.

3. A multi device synchronization data method according to claim 1, wherein said mobile device or remote devices further comprises authorizing reception of said at least one filtered notification event.

4. A multi device synchronization data method according to claim 3, wherein said mobile device or remote devices further defines which data of said modified data to be synchronized with other devices.

5. A multi device synchronization data method according to claim 2, comprising registering each of said mobile device or remote devices to a registration server of said remote server.

6. A multi device synchronization data method according to claim 5, wherein each of said devices registering is performed by using an access layer via an Internet protocol.

7. A multi device synchronization data method according to claim 6, wherein said Internet protocol is any of a Session Initiation Protocol (SIP), a Hypertext Transfer Protocol (HTTP) and/or and IMAP.

8. A multi device synchronization data method according to claim 4, wherein said data is defined by using a data domain label.

9. A multi device synchronization data method according to claim 5, comprising automatically stopping said registering upon request of any of said mobile device or remote devices.

10. A multi device synchronization data method according to claim 2, comprising storing said modified data in a database before sending said at least one filtered notification.

11. A multi device synchronization data method according to claim 10, wherein said data is defined by using a data domain label and said sending includes an indication of said data domain label and an identity of which of said devices has triggered the filtered notification event.

12. A multi device synchronization data method according to claim 2 or 11, wherein said filtered notification event includes the content of said modified data, a timestamp of said filtered notification event and a plurality of additional parameters sent via said access layer.

13. A multi device synchronization data method according to claim 12, comprising performing said sending via said access layer via a SIP NOTIFY and/or a SIP INFO command for SIP protocol and/or via the transport protocol used by said devices wishing to receive said at least one filtered notification event.

14. A multi device synchronization data method according to claim 1, wherein when any of said mobile device or remote devices is offline said sending of said at least one filtered notification event is performed by an application service engine.

15. A multi device synchronization data method according to claim 14, wherein said application service engine comprises a push notification, an email and/or a short message service (sms).

16. A multi device synchronization data system, comprising:
means for establishing a connection between a mobile device with one or more remote devices through a remote server;
means for receiving presence information about any of said mobile device or remote devices;
means for synchronizing a data sharing between said mobile device and said one or more remote devices based upon said presence information received, and
said remote server adapted to trigger a set of notification events according to said presence information to perform said synchronization,
**characterized in that** the system comprises an event filter engine comprising means for filtering said set of notification events to select any of said mobile device or remote devices that will receive a filtered notification event, allowing sharing said data.

17. A multi device synchronization data system according to claim 16, adapted to implement a method according to claims 1 to 15.
